# EUROPEAN PATENT APPLICATION

(11) **EP 3 281 804 A1**
(43) Date of publication of application: **14.02.2018**
(21) Application number: 16776558.5
(22) Date of filing: 06.04.2016
(51) Int. Cl.: B44C 1/175, B41M 5/00, C04B 41/89

(54) **METHOD FOR PRODUCING TRANSFER SHEET AND USE THEREOF**

(30) Priority: 07.04.2015 JP 2015078740
(71) Applicant: Mimaki Engineering Co., Ltd., Tomi-City, Nagano 389-0512 (JP)
(72) Inventor: NAKAMURA, Norikazu, Tomi-city Nagano 389-0512 (JP)
(74) Representative: Takeuchi, Maya
(86) International application number: PCT/JP2016/061254
(87) International publication number: WO 2016/163392

(57) **Abstract**

A method for manufacturing a transfer sheet capable of forming a coat layer for protecting an image with high positional accuracy is provided. The method includes a step of printing an ink for forming an image on a water-soluble layer (L1) by an inkjet method to form an image layer (L2), and a step of printing an ink containing a photocurable compound on the image layer (L2) by the inkjet method to form a coat layer (L3), and the water-soluble layer (L1), the image layer (L2), or the coat layer (L3) contains a hot-melt inorganic substance.

## Description

### TECHNICAL FIELD

The present invention relates to a method for manufacturing a transfer sheet for printing an image on a medium on which printing is performed and the use thereof.

### BACKGROUND ART

Patent Literature 1 describes a method including: forming an adhesive latent image made of an adhesive composition on an image receiving material; sprinkling an inorganic pigment powder on the surface of the image receiving material on a side where the adhesive latent image is formed and adhering an inorganic pigment to an adhesive latent image part to form an inorganic pigment image; disposing the inorganic pigment image formed on the image receiving material on the surface of a ceramic body; heating the ceramic body on which the inorganic pigment image is disposed; and sintering the inorganic pigment image on the surface of the ceramic body.

### CITATION LIST

### PATENT LITERATURE

Patent Literature 1: JP 2006-35480 A

### SUMMARY

### TECHNICAL PROBLEMS

In the technique of Patent Literature 1, a cover coat is formed by coating or transfer. In the formation of a cover coat by coating and transfer, a cover coat is difficult to be formed at only a desired position with high precision.

The present invention has been made in view of the above problems, and provides a method for manufacturing a transfer sheet capable of forming a layer for protecting an image with high positional accuracy in a transfer sheet for transfer printing on ceramics.

### SOLUTIONS TO THE PROBLEMS

As a result of intensive study by the present inventor to solve the above problem, the present invention has been reached as follows.

A method for manufacturing a transfer sheet according to the present invention includes an image layer forming step of forming an image layer by printing an ink for forming an image on a water-soluble layer for a base material having the water-soluble layer containing a water-soluble component by an inkjet method; and a coat layer forming step of printing an ink containing a photocurable compound on the image layer by the inkjet method to form a coat layer, at least one of the water-soluble layer, the ink for forming the image, and the ink containing the photocurable compound containing a hot-melt inorganic substance.

With the above configuration, since the coat layer is formed by the inkjet method, the coat layer can be formed on the image layer with high positional accuracy.

In the method for manufacturing a transfer sheet according to the present invention, the ink containing the photocurable compound more preferably contains the hot-melt inorganic substance.

With the above configuration, after heating and cooling after transferring, the hot-melt inorganic substance is sintered or solidified after melting. By forming the hot-melt inorganic substance after heating on the surface of the image, the image of the obtained printed matter can be protected. In addition, gloss can be given to the image by the hot-melt inorganic substance.

In the method for manufacturing a transfer sheet according to the present invention, the hot-melt inorganic substance is more preferably glass.

In the heating after transfer to the printing object, since the glass adheres relatively easily to the printing object such as ceramics, image stability after heating can be improved.

A transfer sheet according to the present invention is characterized by being manufactured by the method for manufacturing a transfer sheet.

With the above structure, a transfer sheet in which the coat layer is formed on the image layer with high positional accuracy can be provided.

The method for manufacturing a printed matter according to the present invention includes a transfer step of immersing the transfer sheet manufactured by the method for manufacturing a transfer sheet in a hydrophilic solvent and attaching a printing object, from the image layer side, to the image layer and the coat layer separated from the base material by dissolving the water-soluble layer, and a heating step of heating the printing object after the transfer step.

With the above configuration, a printed matter in which the coat layer after heating protects the image layer with high positional accuracy can be manufactured.

In the method for manufacturing a printed matter according to the present invention, the printing object is more preferably a ceramic.

The transfer sheet according to the present invention can be suitably used for printing on ceramics.

The inkjet ink used for coating the image layer when manufacturing the transfer sheet according to the present invention is characterized by including a photocurable compound and a hot-melt inorganic substance.

With the above configuration, a transfer sheet in which the coat layer is formed on the image layer with high positional accuracy can be manufactured.

### EFFECT OF THE INVENTION

According to the present invention, a transfer sheet in which the coat layer is formed on the image layer with high positional accuracy can be advantageously provided.

### BRIEF DESCRIPTION OF THE DRAWINGS

FIG. 1 is a diagram schematically showing a manufacturing procedure of a transfer sheet S in an embodiment of a method for manufacturing a transfer sheet according to the present invention.
FIG. 2 is a diagram showing a configuration example of a head used in the embodiment of the method for manufacturing a transfer sheet according to the present invention.
FIG. 3 is a diagram schematically showing a configuration of a transfer sheet S manufactured in the embodiment of the method for manufacturing a transfer sheet according to the present invention.
FIG. 4 is a diagram schematically showing a transfer step in an embodiment of a method for manufacturing a printed matter according to the present invention.

### DESCRIPTION OF EMBODIMENT

### < Method for Manufacturing Transfer Sheet>

### [One Embodiment of Method for Manufacturing Transfer Sheet According to the Present Invention]

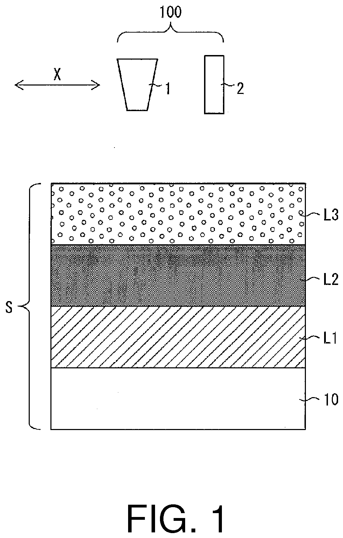

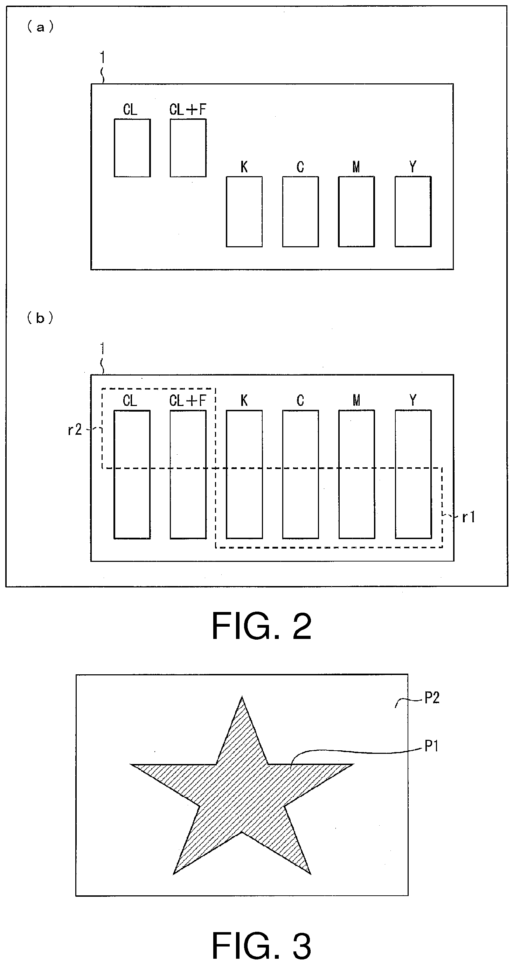

An embodiment of a method for manufacturing a transfer sheet according to the present invention will be described with reference to FIGs. 1, 2 and 3. FIG. 1 is a diagram schematically showing a manufacturing procedure of a transfer sheet S in an embodiment of the method for manufacturing a transfer sheet according to the present invention. FIG. 2 is a diagram showing a configuration example of a head used in the embodiment of the method for manufacturing a transfer sheet according to the present invention. FIG. 3 is a diagram schematically showing a configuration of a transfer sheet S manufactured in the embodiment of the method for manufacturing a transfer sheet according to the present invention.

As shown in FIG. 1, a printing apparatus 100 includes a head 1 and a UV-LED (Ultraviolet-Light Emitting Diode) lamp 2.

As shown in FIG. 1, a transfer sheet S is formed by laminating a film 10 which is a base material, a starch layer L1 which is a water-soluble layer, an image layer L2 and a coat layer L3.

### (Head 1)

The head 1 is an inkjet head for discharging ink. While the head 1 reciprocates in an X direction (main scanning direction), the head 1 scans the film 10 having the starch layer L1. By discharging ink while scanning, the ink is discharged onto the starch layer L1 or the image layer L2 to form the image layer L2 and the coat layer L3.

The inkjet head used in the method for manufacturing a transfer sheet according to the present invention may be a conventionally known one. For example, an inkjet head that discharges liquid droplets by utilizing vibration of a piezoelectric element, an inkjet head that uses thermal energy, and the like are exemplified. Here, the inkjet head that discharges droplets by utilizing vibration of the piezoelectric element is an inkjet head that forms ink droplets by mechanical deformation of an electrostrictive element.

Further, in the embodiment, a mode in which, when the head 1 scans the film 10 in the X direction, the head 1 moves without moving the transfer sheet S in the process of manufacture will be described. However, the scanning mode in the method for manufacturing a transfer sheet according to the present invention is not limited to this, and other modes may be used as long as the head and the transfer sheet in the process of manufacture move relative to each other.

### (Nozzle Rows Y, M, C, K, CL + F, and CL)

As shown in (a) and (b) of FIG. 2, the head 1 has a nozzle row including one or more nozzles aligned along a sub-scanning direction. The sub-scanning direction is a direction orthogonal to the main scanning direction on a plane parallel to the surface of the transfer sheet S. The nozzle rows Y, M, C, and K are nozzle rows for discharging ultraviolet curable inks of cyan (C), magenta (M), and yellow (Y) which are three primary colors of subtractive color mixture obtained by color separation of color images, and black (K). In addition, the nozzle rows CL + F and CL are nozzle rows for discharging clear ink containing glass frit (hot-melt inorganic substance) and clear ink not containing glass frit, respectively.

Incidentally, the ink used in the method for manufacturing a transfer sheet according to the present invention is not limited to cyan, magenta, yellow, and black, clear ink + frit, and clear ink, and within the scope of the present invention, depending on the printed matter to be manufactured, an arbitrary ink can be employed.

### (Configuration of Head 1)

In the embodiment, the head 1 having the nozzle rows Y, M, C, K, CL + F, and CL has the configuration shown in (a) of FIG. 2.

As shown in (a) of FIG. 2, the nozzle rows Y, M, C, and K and the nozzle rows CL + F and CL are disposed at different positions in the sub-scanning direction, constituting a so-called stagger arrangement.

With such a configuration, inks for forming the image layer L2 are discharged from the nozzle rows Y, M, C, and K onto the starch layer L1 while the head 1 scans once. On the other hand, inks for forming the coat layer L3 are discharged onto the image layer L2 formed by the inks discharged from the nozzle rows Y, M, C, and K by the previous scanning of the head 1 from the nozzle rows CL + F and CL.

This is achieved by moving the head 1 in the sub-scanning direction by the length of the nozzle row every time the head 1 scans, so that the nozzle rows Y, M, C and C are disposed at positions where nothing is formed on the starch layer L1, and the nozzle rows CL + F and CL are disposed at the same positions as the positions of the nozzle rows Y, M, C, and K in the sub-scanning direction when the head 1 scans at the previous time.

As described above, the inks can be discharged from the nozzle rows CL + F and CL onto an object obtained by UV-curing the inks discharged from the nozzle rows Y, M, C, and K by the UV-LED lamp 2. Further, when the head 1 scans once, the image layer L2 and the coat layer L3 can be formed at the same time.

### (Modification of Head Configuration)

Another configuration example of the head used in one embodiment of the method for manufacturing a transfer sheet according to the present invention will be described. In this example, differences from the configuration of the above-described head 1 will be mainly described, and similar configurations and the like are denoted by the same reference numerals, and description thereof will be omitted.

As shown in (b) of FIG. 2, the nozzle rows Y, M, C, and K and the nozzle rows CL + F and CL are disposed at the same positions in the sub-scanning direction.

Here, inks are controlled to be discharged only from a half region r1 of the nozzle rows Y, M, C, and K on the downstream side in the sub-scanning direction, and inks are controlled to be discharged only from a half region r2 of the nozzle rows CL + F and CL on the upstream side in the sub-scanning direction. The lengths of the regions r1 and r2 in the sub-scanning direction are equal to each other.

With such a configuration, inks to form the image layer L2 are discharged from the region r1 of the nozzle rows Y, M, C, and K onto the starch layer L1 while the head 1 scans once, but no ink is discharged from the nozzles of the nozzle rows CL + F and CL which are at the same positions in the sub-scanning direction as in the region r1.

Further, inks for forming the coat layer L3 are discharged from the region r2 of the nozzle row CL + F and CL onto the image layer L2 formed by the inks discharged from the region r1 of the nozzle rows Y, M, C, and K by the previous scanning of the head 1, but no ink is discharged from the nozzles of the nozzle rows Y, M, C, and K which are at the same positions in the sub-scanning direction as in the region r2.

This is because each time the head 1 scans, the head 1 is moved in the sub-scanning direction by the length of the region r1 or r2 in the sub-scanning direction which is the length of an ink discharge region so that the region r1 of the nozzle rows Y, M, C, and K is disposed at positions where nothing is formed on the starch layer L1 and the region r2 of the nozzle rows CL + F and CL is disposed arranged at the same position as that of the region r1 of the nozzle rows Y, M, C, and K in the sub-scanning direction when the head 1 scans at the previous time.

As described above, the inks discharged from the region r2 of the nozzle rows CL + F and CL can be discharged onto an object obtained by UV-curing the inks discharged from the region r1 of the nozzle rows Y, M, C, and K by the UV-LED lamp 2. Further, when the head 1 scans once, the image layer L2 and the coat layer L3 can be formed at the same time. That is, the same effect as the effect obtained by the configuration in (a) of FIG. 2 can be obtained.

Further, the control means (not shown) controls the driving state of the head. Therefore, the operation of discharging inks from some regions of the nozzle rows like the region r1 and the region r2 in this example can be executed by controlling the driving of the head by the control unit of the head. Therefore, even though an inkjet printing apparatus not having the structure shown in (a) of FIG. 2 is used, the same operation as that in the example in (a) of FIG. 2 can be achieved by dividing the nozzles of the nozzle rows into the regions r1 and r2 in this example.

### (UV-LED lamp 2)

The UV-LED lamp 2 is an instrument that irradiates an ultraviolet curable ink discharged from the head 1 with ultraviolet rays.

In the embodiment, a case where an ultraviolet curable ink is used as an ink for forming the image layer L2 and the coat layer L3 will be described.

When the ultraviolet curable ink is used in the method for manufacturing a transfer sheet according to the present invention, the instrument for radiating light is not limited to that in this mode, and various conventionally known instruments that can irradiate ultraviolet rays can be employed.

### (Film 10)

The film 10 is formed by molding a synthetic resin or the like into a thin film-like shape. The film 10 corresponds to the base material included in the transfer sheet according to the present invention.

As the kinds of the base materials, for example, paper, polyethylene terephthalate, polyamide, polycarbonate, glassine paper, cellulose ester, fluorine polymer, polyether, polyacetal, polyolefin, polyimide, polyphenylene sulfide, polypropylene, polysulfone, and cellophane and the like are given.

As for the shape of the base material, as in the embodiment, the film-like shape is preferable from the viewpoint of convenience of handling, but the shape is not limited to the film-like shape, and base materials having various shapes such as a plate shape can be employed. In addition, the base material need only have a water-soluble layer containing a water-soluble component, and may not be a film or the like in which a water-soluble layer is formed but may be a material itself obtained by curing the water-soluble component. In other words, the base material may include only the water-soluble layer.

### (Starch Layer L1)

The starch layer L1 is a layer formed by solidifying starch on the film 10.

In the embodiment, starch is employed as the water-soluble component included in the transfer sheet according to the present invention, but any other material which is dissolved when the transfer sheet is immersed in water to make it possible to peel the base material from the image layer may be employed.

In the embodiment, a case where the film 10 having the starch layer L1 in advance is used will be described. As such a film having a starch layer, various films are commercially available. In the method for manufacturing a transfer sheet according to the present invention, only the film 10 serving as the base material is prepared, and the starch layer L1 which is a water-soluble component or the layer corresponding to the starch layer L1 may also be printed by a method such as an inkjet method. That is, the method for manufacturing a transfer sheet according to the present invention may include a step of forming a base material having a water-soluble layer by discharging a substance containing a water-soluble component to a base material before an image layer forming step (will be described later).

### (Image layer L2)

The image layer L2 is a layer formed by printing an ink for forming an image by an inkjet method.

In the embodiment, an ultraviolet curable ink is used as an ink for forming an image, but in the method for manufacturing a transfer sheet according to the present invention, as the ink for forming an image, any ink which can form an image on a water-soluble layer by the inkjet method may be used. Among them, a photo-curable ink is preferable, and an ultraviolet curable ink is more preferable. Since the ultraviolet curable ink can be easily cured in a short time, the image layer can be formed within a short period of time. Further, since the ink can easily form a laminate film, the image layer, the coat layer, and the like can be manufactured within a short period of time.

The ultraviolet curable ink contains an ultraviolet curable compound. The ultraviolet curable compound is not limited as long as the compound is cured when being irradiated with ultraviolet rays. As the ultraviolet curable compound, a curable monomer, a curable oligomer, and the like which are polymerized by irradiation with ultraviolet rays are given. As the curable monomers, for example, low-viscosity acrylic monomers, vinyl ethers, oxetane monomers, cycloaliphatic epoxy monomers, and the like are given. As the curable oligomer, for example, acrylic oligomers and the like are given.

### (Coat Layer L3)

The coat layer L3 is a layer formed by printing an ultraviolet curable ink containing glass frit on the image layer L2 by an inkjet method.

Since the coat layer L3 is formed by the inkjet method, the coat layer L3 can be formed on the image layer L2 with high positional accuracy.

In the method for manufacturing a transfer sheet method according to the present invention, the ink for forming the coat layer L3 may be an inkjet printing ink containing a photocurable compound, but like the ink for forming an image, the ink is preferably an ultraviolet curable ink.

Further, in the method for manufacturing a transfer sheet according to the present invention, the ink for forming the coat layer L3 need not contain a hot-melt inorganic substance, but preferably contain the hot-melt inorganic substance. By heating and cooling after transfer, the hot-melt inorganic substance is sintered or melted and then solidified. The solidified hot-melt inorganic substance or the like is formed on the surface of the image to make it possible to protect the image on the obtained printed matter. In addition, gloss can be given to the image by the hot-melt inorganic substance.

Here, the hot-melt inorganic substance is preferably glass, silicon oxide, silica, or quartz, more preferably glass. By heating the glass after transfer, the glass adheres relatively easily to a printing object such as ceramics. Therefore, image stability after heating can be improved.

When an ink containing a hot-melt inorganic substance is discharged by an inkjet method, the shape of the hot-melt inorganic substance is more preferably powder. Further, the particle size of the powder is not particularly limited as long as the ink can be printed by inkjet printing.

In the embodiment, a mode in which the hot-melt inorganic substance is contained in the ink for forming the coat layer L3 will be described. However, in the method for manufacturing a transfer sheet according to the present invention, at least one of the water-soluble layer, the ink for forming an image, and the ink for forming the coat layer need only contain a hot-melt inorganic substance. However, since the hot-melt inorganic substance after heating protects the image and gives gloss to the image, the ink for forming the coat layer more preferably contains a hot-melt inorganic substance as in the embodiment.

Note that the ink for forming the coat layer L3 is an embodiment of an inkjet ink used for coating the image layer when the transfer sheet according to the present invention is manufactured.

### [Method for Manufacturing Transfer Sheet S]

Next, a method for manufacturing a transfer sheet S will be described. The method for manufacturing the transfer sheet S according to the embodiment has an image layer forming step and a coat layer forming step in order.

First, while the head 1 shown in FIG. 1 scans in the X direction, ink for forming the image layer L2 is discharged onto the starch layer L1 (image layer forming step). At this time, since the UV-LED lamp 2 is adjacent to the head 1, the UV-LED lamp 2 also moves like the head 1.

Ultraviolet rays emitted from the UV-LED lamp 2 are radiated on the ink discharged from the head 1. As a result, the discharged ink is cured.

Every time one scanning of the head 1 is completed, the head 1 is moved in the sub-scanning direction. A moving distance of the head 1 is equal to the length of a discharge region of any one of the nozzle rows of the head 1 in the sub-scanning direction.

In this way, movement of the head 1 in the sub-scanning direction every scanning of the head 1 and scanning of the head 1 and the UV-LED lamp 2 in the X direction are repeated to make it possible to form the image layer L2 and the coat layer L3. As the image of the image layer L2, a background P2 is drawn around a symbol P1 as shown in FIG. 3.

When the coat layer L3 is to be formed, a clear ink containing glass frit is discharged from the nozzle rows CL + F onto the symbol P1 and a clear ink not containing the glass frit is discharged from the nozzle row CL onto the background P2 (coat layer forming step). Since the ink is discharged by the inkjet method, the outline of the region where the clear ink containing glass frit is landed can be aligned to the outline of the symbol P1 with high accuracy. In this way, by using the inkjet method, the coat layer L3 can be formed on the image layer L2 with high positional accuracy.

Further, by heating and cooling the coat layer L3 after transfer, the glass frit in the coat layer L3 is sintered or melted and then solidified. By forming the solidified glass frit on the surface of the symbol P1, a printed matter in which the symbol PI is more strongly protected can be manufactured. In addition, gloss can be given to only the symbol P1 by means of the glass frit.

The transfer sheet S manufactured as described above has the configuration different from a conventional product in that the coat layer L3 is positionally controlled with high precision unlike a conventional coat layer and both the image layer L2 and the coat layer L3 are configured by dots each formed by minute ink because the inkjet printing is used.

### [Method for Manufacturing Printed Matter]

Next, a method for manufacturing a printed matter to be printed on the surface of a ceramic body 30 by using the transfer sheet S will be described. The method for manufacturing a printed matter according to the embodiment has a transfer step and a heating step in order.

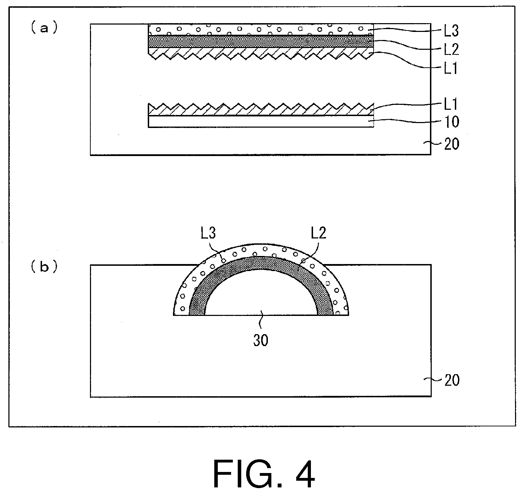

First, as shown in (a) of FIG. 4, when the transfer sheet S is immersed in water 20, the starch layer L1 is dissolved, and the image layer L2 and the coat layer L3 are separated from the film 10. Apart of the starch layer L1 remains on the surfaces of the image layer L2 and the film 10. Then, the film 10 sinks in the water 20, and, in contrast to this, the image layer L2 and the coat layer L3 float on the water 20.

In the embodiment, water is used as a solvent for dissolving the starch layer L1. However, as a hydrophilic solvent used in the method for manufacturing a printed matter manufacturing method according to the present invention, any solvent which can dissolve the water-soluble component contained in the transfer sheet according to the present invention may be used.

Next, as shown in (b) of FIG. 4, the ceramic body 30 is placed in the water 20, and the ceramic body 30 is attached from the image layer L2 and the image layer L2 side of the coat layer L3 (transfer step). The starch layer L1 remains on the image layer L2, and the starch layer L1 partially dissolved by the water 20 adheres to the ceramic body 30 due to the adhesive force generated on the surface. Even if the starch layer L1 does not remain, the ceramic body 30 can be attached to the image layer L2 and the coat layer L3 to conduct transfer.

Here, the ceramic body 30 is a printing object for printing an image of the transfer sheet S. In the embodiment, printing is performed on the ceramic body 30. However, in the method for manufacturing a printed matter according to the present invention, a desired printing object can be employed as long as it can withstand heating after transfer.

Next, the ceramic body 30 is taken out of the water 20, and the ceramic body 30 is heated (heating step). The heating method is not particularly limited, but from the viewpoints of temperature control, color development, and the like, for example, an electric kiln or the like is preferably used. The heating conditions can be appropriately selected according to the material of the ceramic body 30, the type of the hot-melt inorganic substance, and the like, but a temperature at which the hot-melt inorganic substance can be sintered or melted is preferably set. For example, the heating temperature is more preferably 700°C to 800°C. When cooling is performed after heating, the glass frit is sintered or melted and then solidified. The solidified glass frit or the like is formed on the surface of the image to make it possible to protect an image on the obtained printed matter. Gloss can be given to the image by the glass frit.

### <Additional Information>

As described above, one embodiment of the method for manufacturing a transfer sheet according to the present invention includes the image layer forming step of printing ink for forming an image on the starch layer L1 by the inkjet method for the film 10 having the starch layer L1 to form the image layer L2, and the coat layer forming step of printing an ultraviolet curable ink on the image layer L2 by an inkjet method to form the coat layer L3, at least one of the starch layer L1, the ink for forming the image, and the ultraviolet curable ink containing a hot-melt inorganic substance.

With the above configuration, since the coat layer L3 is formed by the inkjet method, the coat layer L3 can be formed on the image layer L2 with high positional accuracy.

In one embodiment of the method for manufacturing a transfer sheet according to the present invention, the ultraviolet curable ink contains the hot-melt inorganic substance.

With the above configuration, after heating and cooling after transferring, the hot-melt inorganic substance is sintered or melt and then solidified. The solidified hot-melt inorganic substance or the like is formed on the surface of the image to make it possible to protect the image on the obtained printed matter. In addition, gloss can be given to the image by the hot-melt inorganic substance.

In one embodiment of the method for manufacturing a transfer sheet according to the present invention, the hot-melt inorganic substance is a glass frit.

In the heating after transfer to the printing object, since the glass adheres relatively easily to the printing object such as the ceramic body 30, image stability after heating can be improved.

One embodiment of the transfer sheet according to the present invention is manufactured according to the embodiment of the method for manufacturing a transfer sheet.

With the above configuration, the transfer sheet S in which the coat layer L3 is formed on the image layer L2 with high positional accuracy can be provided.

One embodiment of the method for manufacturing a printed matter according to the present invention includes the transfer step of immersing the transfer sheet S manufactured according to one embodiment of the method for manufacturing a transfer sheet in the water 20 to dissolve the starch layer L1 so as to adhere a printing object to the image layer L2 and the coat layer L3 separated from the film 10 from the image layer L2 side, and the heating step of heating the printing object after the transfer step.

With the above configuration, a printed matter in which the coat layer L3 after heating protects the image layer L2 with high positional accuracy can be given.

In one embodiment of the method for manufacturing a printed matter according to the present invention, the printing object is the ceramic body 30.

One embodiment of the transfer sheet according to the present invention can be suitably used for printing on the ceramic body 30.

The inkjet ink used for coating the image layer L2 when an embodiment of the transfer sheet according to the present invention is manufactured is characterized by containing an ultraviolet curable compound and a glass frit.

With the above configuration, the transfer sheet S in which the coat layer L3 is formed on the image layer L2 with high positional accuracy can be manufactured.

### INDUSTRIAL APPLICABILITY

The present invention can be used for printing on a printing object such as ceramics.

## Claims

1. A method for manufacturing a transfer sheet, comprising:
an image layer forming step of forming an image layer by printing an ink for forming an image on a base material having a water-soluble layer containing a water-soluble component by an inkjet method; and
a coat layer forming step of printing an ink containing a photocurable compound on the image layer by an inkjet method to form a coat layer,
wherein at least one of the water-soluble layer, the ink for forming the image, and the ink containing the photocurable compound contains a hot-melt inorganic substance.

2. The method for manufacturing a transfer sheet according to claim 1, wherein
the ink containing the photocurable compound contains the hot-melt inorganic substance.

3. The method for manufacturing a transfer sheet according to claim 1, wherein
the hot-melt inorganic substance is glass.

4. The method for manufacturing a transfer sheet according to claim 2, wherein
the hot-melt inorganic substance is glass.

5. A transfer sheet manufactured by the method for manufacturing a transfer sheet according to anyone of claims 1 to 4.

6. A method for manufacturing a printed matter, comprising:
a transfer step of immersing the transfer sheet manufactured by the method for manufacturing a transfer sheet according to anyone of claims 1 to 4 to dissolve the water-soluble layer, so as to adhere a printing object to the image layer and the coat layer separated from the base material, from a side of the image layer; and
a heating step of heating the printing object after the transfer step.

7. The method for manufacturing a printed matter according to claim 6, wherein
the printing object is a ceramic.

8. An inkjet ink used for coating an image layer when a transfer sheet is manufactured, comprising:
a photocurable compound and a hot-melt inorganic substance.
